# EUROPÄISCHE PATENTSCHRIFT

(11) **EP 1 591 676 B1**
(45) Veröffentlichungstag und Bekanntmachung des Hinweises auf die Patenterteilung: **07.02.2007**
(21) Anmeldenummer: 05009364.0
(22) Anmeldetag: 28.04.2005
(51) Int. Cl.: F16B 37/06

(54) **Einpressmutter**
Clinch nut
Elément rapporté à enfoncement automatique pour tôle

(30) Priorität: 28.04.2004 DE 102004020698
(43) Veröffentlichungstag der Anmeldung: 02.11.2005
(73) Patentinhaber: NEDSCHROEF PLETTENBERG GmbH, 58840 Plettenberg (DE)
(72) Erfinder: Kob, Peter-Wilm, 58849 Herscheid (DE); Kirschniok, Joachim, 44369 Dortmund (DE); Hirschfeld, Henning, 58840 Plettenberg (DE); Ferreau, Oliver, 58762 Altena (DE)
(74) Vertreter: Alber, Norbert

(56) Entgegenhaltungen:
- GB-A- 1 177 152
- US-A1- 2002 172 573

## Beschreibung

### I. Anwendungsgebiet

Die Erfindung betrifft Einpressmuttern, wie sie beispielsweise aus der DE 15 75 187 sowie der DE 36 26 466 bekannt sind.

### II. Technischer Hintergrund

Dabei wird die Einpressmutter in ein nicht-vorgelochtes Blech eingepresst und wirkt dabei als Stanzstempel, die einen Butzen aus dem Blech ausstanzt.

Um die notwendige drehfeste Fixierung der Einpressmutter im Blech zu erreichen, ist der im Blech steckende Schaftteil der Einpressmutter mit einem unrunden, meist polygonen Außenumfang ausgestattet.

Vor allem im Großserieneinsatz geschieht es daher immer wieder, dass durch nicht vollständig gelöste Materialverbindung zwischen dem Butzen und dem Blechteil - vor allem im Bereich zwischen zwei benachbarten Ecken des polygonen Außenumfanges des Schaftteiles - der Butzen nicht aus der Matrize herausfällt, und dadurch die Einpressanlage automatisch angehalten wird, und der Butzen von Hand beseitigt werden muss, was unter anderem auch gegen eine Einbindung des Einpressvorganges in den Stanz- und Biegeprozess betreffend das restliche Blechteil sprach.

Dabei ist es sowohl aus der US 2002/0172573 als auch aus der GB 1177152 A bekannt, dass trotz polygonem Außendurchmesser des Hauptteiles des Schaftes die als Stanzfläche wirkende Stirnfläche einen runden Außendurchmesser besitzt und ebenso die zugehörige Matrize einen runden Innendurchmesser.

### III. Darstellung der Erfindung

### a) Technische Aufgabe

Es ist daher die Aufgabe gemäß der Erfindung, die Einpressmutter und die zugehörige Matrize so zu gestalten, dass die Nachteile des Standes der Technik vermieden werden und insbesondere eine Prozessintegration in andere Arbeitsschritte mit hoher Zuverlässigkeit möglich wird.

### b) Lösung der Aufgabe

Diese Aufgabe wird durch die Merkmale der Ansprüche 1 und 22 gelöst. Vorteilhafte Ausführungsformen ergeben sich aus den Unteransprüchen.

Dadurch, dass der Stanzstempel, also die freie Stirnfläche des Schaftteiles einerseits, und die auf der Gegenseite des Bleches angelegte Matrize, in die die Einpressmutter beim Einpressen geringfügig eintaucht, einander entsprechende Umfangskonturen und nur einen begrenzten Durchmesserunterschied besitzen, wird der Butzen zuverlässig aus dem Blechteil ausgestanzt, und fällt durch die Matrize ab. Vorzugsweise besitzt die Matrize einen runden Innendurchmesser, der wesentlich einfacher und kostengünstiger herzustellen ist als ein unrunder Durchmesser, so dass ausreichend maßhaltige Rohre und Buchsen als Fertigmatrize oder zumindest als Halbzeug zur Herstellung der Matrize kostengünstig zugekauft werden können.

Vorzugsweise besitzt dementsprechend auch das Schaftteil an seiner freien Stirnfläche einen runden Außendurchmesser, trotz der ansonsten polygonen Außenkontur des restlichen Schaftteiles. Denkbar wären auch übereinstimmende unrunde Konturen von Stanzstempel, also Stirnfläche des Schaftteiles, und Matrize, jedoch erhöht dies nicht nur die Herstellkosten, sondern bedingt auch eine Drehlagenpositionierung der Einpressmutter vor dem Einpressen, nämlich ausgerichtet auf die Drehlage der unrunden Matrize.

Der Unterschied zwischen dem Durchmesser der Matrize und dem Durchmesser der Stirnfläche des Schaftteiles als Stanzstempel hängt von der Dicke des Blechteiles ab und liegt bei 8 bis 12/100 mm pro mm der Blechdicke. Dabei muss die als Stanzstempel wirkende freie Stirnfläche des Schaftteiles keineswegs den größten Außendurchmesser des Schaftteiles darstellen.

Vielmehr hat sich gezeigt, dass der größte Außendurchmesser des Schaftteiles von der freien Stirnfläche aus zurückversetzt vorhanden sein sollte, und dieser größte Außendurchmesser, der sog. Pressdurchmesser, der die vom Stanzdurchmesser erzeugte Innenkontur im Blechteil radial nach außen schiebt, bereits wie der Rest des Schaftteiles polygon ausgebildet sein sollte. Zwischen dem größeren Pressdurchmesser und dem stirnseitigen Stanzdurchmesser verläuft also eine Pressschräge, die zwischen 10° und 20°, insbesondere zwischen 13° und 17°, zur Axialrichtung steht.

Dieser Abschnitt bildet jedoch keinen Kegelstumpf, sondern in dieser Pressschräge laufen die Polygonflächen, die dem Schaft zwischen dem Pressdurchmesser und dem Ansatz zum Kopfteil seine polygonförmige Gestalt geben, aus, um die gewünschte runde Außenkontur am stirnseitigen Stanzdurchmesser des Schaftteiles zu ergeben.

Als richtige axiale Länge der Pressschräge hat sich eine Länge von 5% bis 25%, insbesondere von 8% bis 15%, der axialen Länge des Schaftteiles ergeben, sowie eine Winkelabweichung von 20 - 40°, insbesondere 30 - 40° von der Axialrichtung.

Dabei ist ferner zu beachten, dass die axiale Länge des Schaftteiles kürzer sein soll als die Dicke des Bleches, in welches die Einpressmutter eingesetzt werden soll, damit die eingesetzte Pressmutter auf der Gegenseite nicht über die Kontur des Blechteiles vorsteht und dort Probleme verursacht.

Dabei ist die Differenz zwischen Schaftlänge und Blechdicke nicht immer gleich, sondern hängt einerseits von der absoluten Dicke des Bleches und andererseits von der Materialpaarung Einpressmutter/Blechteil, insbesondere dem Material des Blechteiles, ab. Als vorteilhafte Werte haben sich ergeben:

### Blech: Stahl; Mutter: Stahl

Schaftlänge 0,05 - 0,3 mm, insbesondere 0,05 - 0,1 mm, kürzer als Blechdicke und/oder Schaftlänge 1% - 10% kürzer als Blechdicke, Unterschied in % umso kleiner, je größer Blechdicke.

### Blech: Leichtmetall; Mutter: Stahl

Schaftlänge 0,1 - 0,4 mm, insbesondere 0,1 - 0,2 mm, kürzer als Blechdicke und/oder Schaftlänge 2% - 15% kürzer als Blechdicke, Unterschied in % umso kleiner, je größer Blechdicke.

Die Blechdicke beträgt in der Regel 2 - 6 mm.

Während durch die Verkürzung des Schaftteiles gegenüber dem Blechteil zuverlässig das Überstehen der eingesetzten Mutter über die Rückseite des Blechteiles verhindert wird, wird eine hohe Prozesssicherheit hinsichtlich des Abscherens des Butzens und Herabfallens dadurch erzielt, dass beim Einpressen der Mutter die freie Stirnfläche des Schaftteiles, also die Pressfläche, die Oberseite der Matrize nicht nur erreicht, sondern geringfügig in diese eintaucht, wodurch das Abscheren des Butzens erst zuverlässig erreicht wird, zusammen mit einer ausreichend geringen Durchmesserdifferenz zwischen Außendurchmesser des Pressstempels und Innendurchmessers der Matrize.

Da der Schaftteil der Einpressmutter im montierten Zustand nicht über die Rückseite des Bleches vorstehen soll, ist dies nur erreichbar durch eine ringförmig umlaufende Aufwölbung in der Matrizenstirnfläche, deren axiale Erstreckung größer ist als der Rückstand der freien Stirnfläche des Schaftteiles gegenüber der Blechrückseite im montierten Zustand.

Dabei wird sich dies Aufwölbung in radialer Richtung vorzugsweise unmittelbar an den Innendurchmesser der Matrize anschließen, um dieses Abscheren zu begünstigen. Sobald die ringförmige Aufwölbung vom Innendurchmesser der Matrize radial nach außen versetzt ist, begünstigt die Aufwölbung zwar das Fließen des Materials des Blechteiles auch radial nach innen und damit das Anpressen an den polygonen Außenumfang des eingesetzten Schaftteiles, das Abscheren des Butzens wird jedoch weniger zuverlässig erreicht.

Die axiale Erstreckung des Matrizendurchmessers ist dabei vorzugsweise geringer als die axiale Erstreckung der Pressschräge, so dass der Matrizendurchmesser an der Matrizenstirnfläche größer als der Stanzdurchmesser des Schaftteiles und kleiner als sein Pressdurchmesser gewählt werden sollte.

Der wirksame Innendurchmesser der Matrize, wie er an der freien Stirnfläche der Matrize vorhanden ist, kann sich von dort aus leicht konisch nach hinten erweitern mit einem Matrizenwinkel von 1° bis 5°, maximal von 1° bis 5°. In einer bevorzugten Ausführungsform besitzt die Matrize jedoch auf eine axiale Erstreckung des 1,2 bis 1,8-fachen der Blechdicke den gleichen, unveränderten Durchmesser wie an der freien Stirnfläche, und erfährt erst dann eine vorzugsweise absatzartige deutliche Erweiterung, was die Kosten der Herstellbarkeit der Matrize deutlich senkt.

Die Matrize besitzt im Übrigen eine Härte zwischen 58 und 62 HRc Rockwell, und damit um mindestens 10 HRc Rockwell mehr als die Härte des Schaftteiles der Einpressmutter.

Um die Drehmomentbelastbarkeit der eingesetzten Mutter nicht nur von dem Formschluss zwischen der Außenkontur des Schaftteiles und dem daran anliegenden Material des Blechteiles abhängen zu lassen, ist es bekannt, dass der schulterförmige Überstand des Mutternkopfes gegenüber dem Schaftteil nicht rechtwinklig zur axialen Richtung verläuft, sondern in Form einer schräg nach außen abfallenden Hinterschneidung, so dass bei einer unrunden Außenkontur des Kopfteiles sich die Ecken der schulterförmigen Unterseite des Kopfteiles zusätzlich in die Oberseite des Blechteiles einpressen und die Drehmomentbelastbarkeit weiter erhöhen.

Zum einen hat sich gezeigt, dass eine optimale Verhakung zwischen Schulter und Blechteil erzielt wird, wenn die nach außen unten abfallende Hinterschneidung nicht bis zum Außendurchmesser des Kopfes verläuft, sondern vorher in eine umgekehrte, nach außen oben wieder ansteigende Außenschräge übergeht. Die beste Wirkung wird erzielt, wenn die radiale Erstreckung der Außenschräge 10% bis 30%, insbesondere 15% bis 25%, der radialen Erstreckung der Schulter beträgt.

Weiterhin ist das Einpressen der Vorsprünge der Schulter in das Blechteil nur dann gegeben, wenn der Kopfteil der Einpressmutter eine polygone Außenkontur besitzt, also wenn der Kopfteil beispielsweise nach Art einer üblichen Achtkantmutter geformt ist. Für viele Anwendungsfälle sind jedoch Kopfteile mit runder Außenkontur gewünscht, da das Ansetzen eines Schraubenschlüssels oder ähnlichen Werkzeuges am Außenumfang ohnehin aufgrund der drehfesten Verbindung mit dem Blechteil nicht notwendig ist.

Um auch in diesem Fall die beschriebene Verhakungswirkung zwischen Schulter und Blechteil herbeizuführen, werden erfindungsgemäß zwei Alternativen vorgeschlagen:
Entweder verläuft - bei rundem Außendurchmesser des Kopfes - der Übergang zwischen der schräg abfallenden Hinterschneidung und der Außenschräge nicht in gleichbleibendem radialen Abstand, also ebenfalls entlang einer runden Kontur, auf der Schulter, sondern entlang einer polygonen Kontur, wodurch wiederum eine Verhakungswirkung erzielt wird.

Ein besseres Ergebnis wird jedoch erzielt, wenn die Schulter relativ zur Axialrichtung keine rotationssymmetrische Fläche darstellt, sondern eine in Umlaufrichtung gewellte oder vorzugsweise gezackte Fläche, die entweder bis zum Außendurchmesser durchgehen kann oder auch nur bis zum Übergang in die Außenschräge. Die Außenschräge selbst kann dann wiederum eine rotationssymmetrische, nicht gewellte oder gezackte, Fläche sein.

Die Verdrehsicherheit hängt somit natürlich auch von der radialen Erstreckung der Schulter ab, die umso größer sein sollte, je dünner und/oder härter das Blechteil ist.

Die gewünschten nicht rotationssymmetrischen Erhebungen in der Schulter können beim Herstellen der Einpressmutter durch direkt auf die Schulter einwirkende Werkzeuge erzielt werden, oder auch nach Abschluss der Herstellung der Einpressmutter durch in die Außenumfangsfläche des Kopfes eingebrachte radiale Einprägungen nach innen nahe der Schulter, insbesondere bei rundem Außendurchmesser des Kopfes. Diese Einprägungen können insbesondere direkt während des Einpressvorganges der Einpressmutter ins Blechteil erzeugt werden, indem das Werkzeug zum Aufnehmen der Mutter am Außenumfang des Kopfteiles greift und dort beim Aufnehmen die Einprägungen einbringt, insbesondere erst unmittelbar vor dem Einpressen der Mutter in das Blechteil.

Durch die beschriebene prozesssichere Ausführung der Einpressmutter ist es vor allem möglich, den Vorgang des Einsetzens der Einpressmutter in das Blechteil in den Herstellvorgang für das entsprechende Blechteil, welches meistens durch Stanzen und Biegen hergestellt wird, zu integrieren, also das Einpressen der Einpressmutter im gleichen Arbeitsschritt zusammen mit dem Stanzen oder Biegen des Blechbiegeteiles durchzuführen.

Vor allem wenn das Blechbiegeteil aus einem quasi endlos zugeführten Blechrohling hergestellt wird, bietet dies den Vorteil, dass in einem ersten Bearbeitungsschritt das Blechteil im wesentlichen ausgestanzt, auch gebogen und gleichzeitig die einen oder mehreren Einpressmuttern darin angebracht werden, und erst im nächsten Schritt das so hergestellte fertige Blechbiegeteil durch einen weiteren Stanzschnitt oder das Stanzen des nächsten Blechbiegeteiles vom endlosen Blechrohling abgetrennt wird.

### c) Ausführungsbeispiele

Eine Ausführungsform gemäß der Erfindung ist im Folgenden anhand der Figuren beispielhaft näher beschrieben. Es zeigen:
- Fig. 1:: Einpressmutter und Matrize in unterschiedlichen Bewegungszuständen,
- Fig. 2:: eine Aufsicht auf die Einpressmutter von unten,
- Fig. 3:: eine Seitenansicht der Einpressmutter der Fig. 2, und
- Fig. 4:: die Ausstattung eines Blechbiegeteils mit Einpressmuttern.

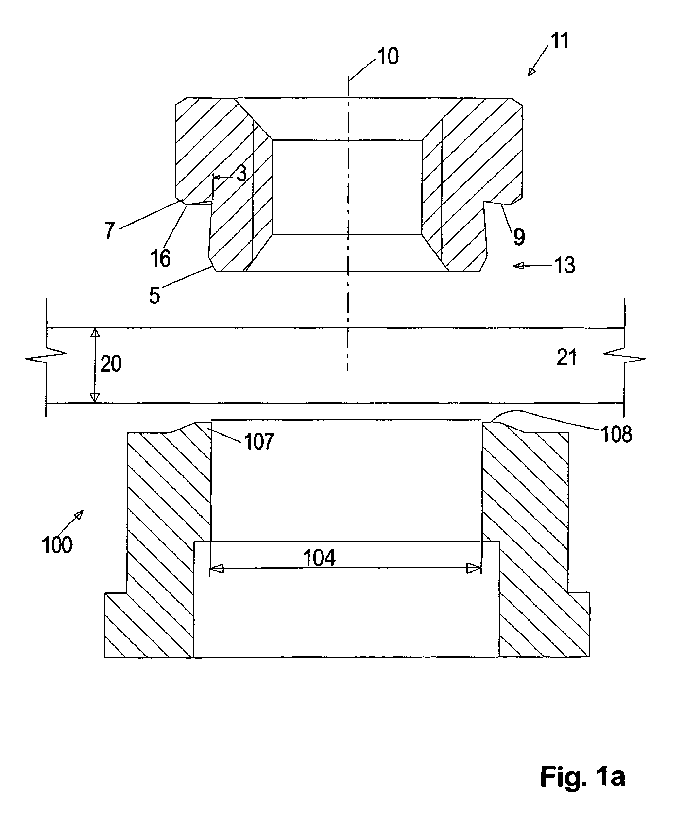

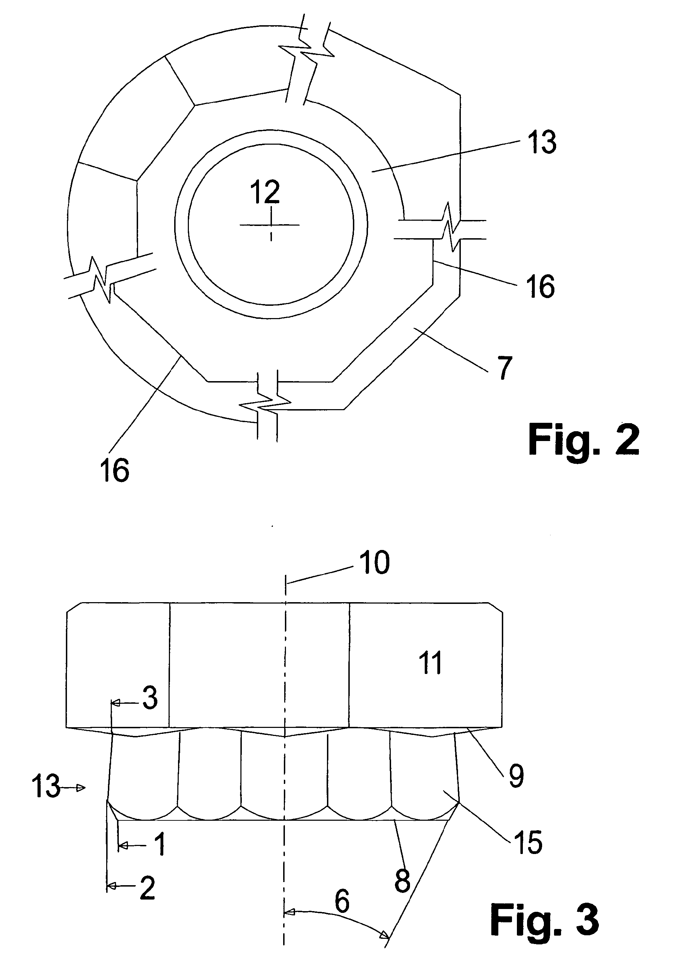

Die Fig. 1a und 3 lassen die Grundform der Einpressmutter am einfachsten erkennen, mit einem Schaftteil 13 und einem demgegenüber breiteren Kopfteil 11, die sich in Axialrichtung 10 aneinander anschließen, vorzugsweise einstückig miteinander ausgebildet sind und - bis auf die polygonen Außenkonturen - rotationssymmetrisch ausgebildet sind.

Kopf 11 als auch Schaft 13 sind von einer Gewindebohrung 12 durchdrungen, die vorzugsweise als Durchgangsbohrung ausgebildet ist, jedoch auch eine Sacklochbohrung sein könnte mit einer dann geschlossenen freien Stirnfläche 8 am Schaftteil 13.

Der Außenumfang des Schaftteiles 13 ist über den Hauptteil seiner Länge als polygon gestaltet mit schräg nach außen zum freien Ende des Schaftteiles hin abfallenden oder auch parallel zur Axialrichtung 10 verlaufenden Polygonflächen 15.

Die Polygonflächen 15 gehen nicht bis zur freien Stirnfläche 8 des Schaftteiles 13 durch, da der größte Durchmesser des Schaftteiles 13 nicht der Stanzdurchmesser 1 am vorderen freien Ende, also der Stirnfläche 8, ist, sondern ein demgegenüber zurück versetzter, größerer Pressdurchmesser 2.

Die Polygonflächen 15 laufen im Bereich der Pressschräge 5 zwischen dem Stanzdurchmesser 1 und dem Pressdurchmesser 2 aus, wodurch der Pressdurchmesser 2 hinsichtlich des Umfanges eine polygone Kontur ergibt, der Stanzdurchmesser 1 dagegen eine runde Kontur.

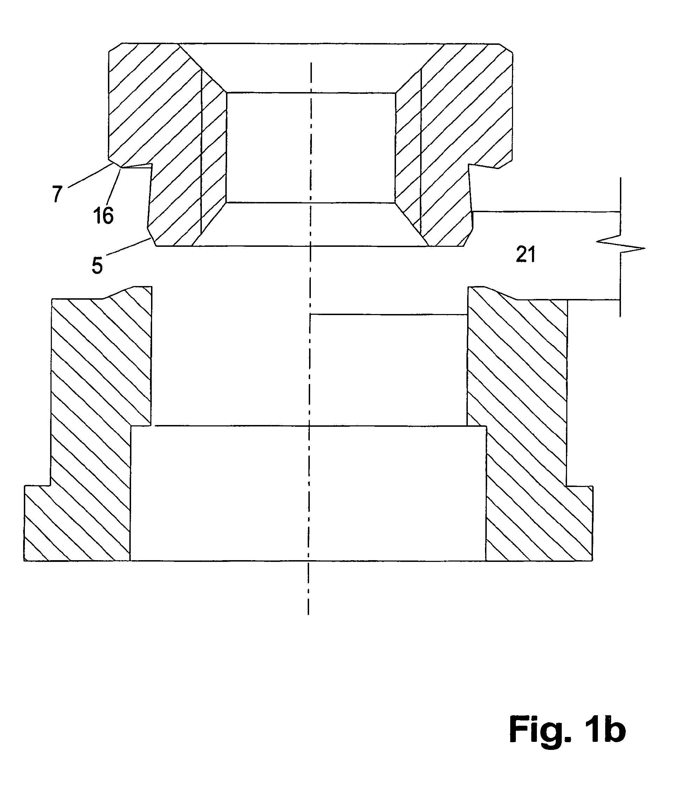

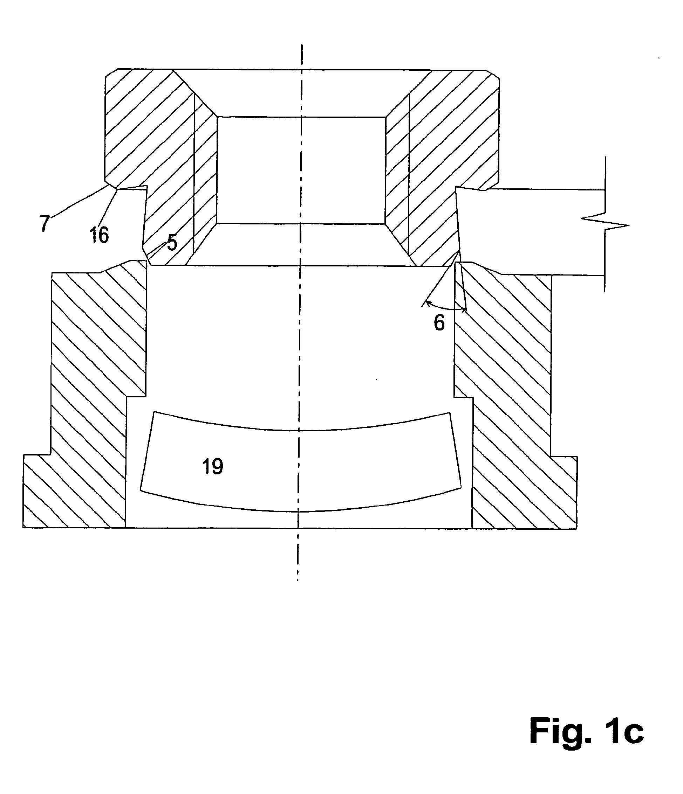

Wie Fig. 1 b zeigt, stanzt der kleinere Stanzdurchmesser 1 primär den Butzen 19 aus, indem er ihn - wie vor allem Fig. 1c zeigt - gegenüber dem Matrizendurchmesser 104 abschert. Der in Einpressrichtung weiter hinten liegende Pressdurchmesser 2 vergrößert die Einpressöffnung durch Verdrängen des umgebenden Blechmaterials, erreicht jedoch die Matrize 100 nicht mehr, da deren Stirnflächen, insbesondere die dort vorhandene Aufwölbung 107, auch am Ende der Einpressbewegung diesen Pressdurchmesser 2 in der Regel nicht mehr erreicht. Die Aufwölbung 107 zusammen mit den sich in der Oberseite des Bleches durch die Hinterschneidung 14 des Schaftteiles 13 gebildeten Erhebungen in der Schulter 9 des Kopfteiles 11 bewirken ein Fließen des Blechmaterials an dem hinterschnittenen Schaftteil 13 und die formschlüssige Anlage an dessen Polygonflächen 15.

Besonders günstig hierfür ist ein Querschnitt der Aufwölbung 107, der am radial äußeren Übergang in die übrige Stirnfläche der Matrize eckig, insbesondere rechteckig, ausgebildet ist, bei einer Aufwölbungsstirnfläche 108, die entweder im rechten Winkel zur Axialrichtung 10 liegt oder sogar trichterförmig von innen nach außen ansteigt.

Damit der Butzen 19 zuverlässig abgetrennt wird, darf die Differenz zwischen Stanzdurchmesser 1 und Matrizendurchmesser 104 nicht zu groß sein, wie in der Tabelle weiter vorne angegeben. Der Matrizendurchmesser und die Höhe der Erhebung der Matrize sind so bemessen, dass bei vollständigem Einpressen der Einpressmutter gegen die Matrize 100, wie in Fig. 1c dargestellt, die Matrize im Axialbereich zwischen Pressdurchmesser 2 und Stanzdurchmesser 1 endet und einen größeren Durchmesser als die Pressschräge 5 an dieser Stelle besitzt.

Damit der Butzen 19 danach zuverlässig durch die Matrize nach unten fällt und entsorgt werden kann, weitet sich der Durchmesser der Matrize von der Stirnfläche aus leicht konisch auf oder besitzt einen gleichbleibenden Durchmesser, dann jedoch über eine axiale Länge des 1,2 bis 1,8-fachen der Blechdicke.

Um mittels der Hinterschneidung 14 in der Schulter 9 des Kopfteiles 11 ebenfalls eine drehfeste Verhakung der Einpressmutter im Blechteil zu bewirken, selbst bei rundem Außenumfang des Kopfes, sind mehrere Ausformungen, auch in Kombination miteinander, möglich.

Wie die Aufsicht auf die Schulter 9 in der Fig. 2 und auch den Fig. 1 zeigt, wird bevorzugt die Hinterschneidung 14 nicht bis zum Außenumfang fortgesetzt, sondern geht vor Erreichen des äußeren Randes in eine Außenschräge 7 über. Die dadurch vom äußeren Rand nach innen versetzte Erhebung 16 läuft bei einer nicht runden Außenkontur des Kopfes 11, wie in der rechten Hälfte der Fig. 2 dargestellt, ebenfalls unrund um und ergibt bereits eine drehfeste, formschlüssige Verbindung gegenüber dem Blech.

Bei einer runden Außenkontur, wie in Fig. 2 in der linken Hälfte dargestellt, kann statt dessen trotz der runden Außenkontur diese Erhebung 16 in axialer Blickrichtung unrund, vorzugsweise polygon, also sechseckig bis zwölfeckig, gestaltet sein, und/oder wie in Fig. 3 ersichtlich wird die Schulter 9 in Umlaufrichtung gezackt oder gewellt ausgebildet, was in Fig. 2 im linken oberen Bildbereich dargestellt ist. Diese Wellung oder Zackung kann bis zum Außenumfang des Kopfes geführt werden, oder ebenfalls in einer entgegengesetzt nach außen ansteigenden Gegenschräge 7 enden, was das plane und formschlüssige, insbesondere spielfreie Anliegen der Außenkontur des Kopfes 11 auf dem Blechteil begünstigt.

Die Fig. 1 zeigen ferner, dass für das Einpressen der Mutter die Einpressmutter lediglich an der richtigen Stelle oberhalb der Matrize 100 positioniert und nach unten in Richtung gegen die Matrize 100 gedrückt werden muss, wobei sich wegen der Pressschräge 6 im Endzustand Matrize 100 und Einpressmutter zueinander zentrieren, wenn auch nur mit geringfügiger Einpresstiefe.

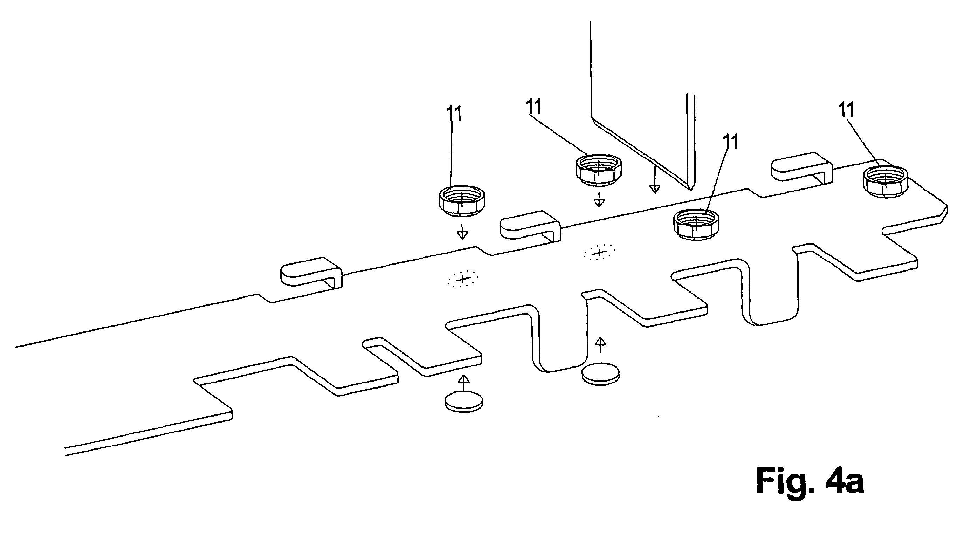

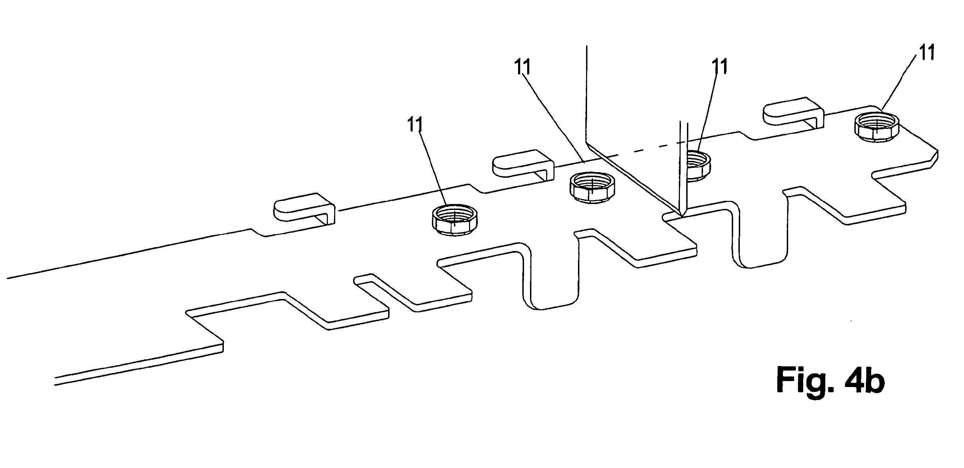

Eine Drehlagenausrichtung zueinander ist nicht erforderlich, wenn Stanzdurchmesser 1 und Matrizendurchmesser 104 rund ausgebildet sind. Die Fig. 4a und 4b zeigen, wie aus einem quasi endlos zugeführten Blechrohling zunächst in einem ersten Arbeitsschritt die Außenkontur des Bleches gestanzt, gleichzeitig Umbiegungen vorgenommen und in das Blechteil die Einpressmuttern eingepresst werden.

Bei diesem fast fertigen, noch am ursprünglichen endlosen Rohteil hängenden Blechbiegeteil wird in einem nächsten Schritt lediglich noch die Abtrennung und damit Vereinzelung des bereits ansonsten fertigen Blechbiegeteiles zum nächsten Blechbiegeteil, also dem endlosen Rohling, vorgenommen, so dass die Gesamtherstellung nur zwei Arbeitsschritte umfassen muss.

Ebenso ist auch noch die Abtrennung im ersten Schritt zusätzlich möglich, wenn dabei das Einpressen der Einpressmutter geringfügig vor dem Stanzen und/oder Biegen stattfindet, insbesondere beginnt.

### BEZUGSZEICHENLISTE

- 1: Stanzdurchmesser
- 2: Pressdurchmesser
- 3: Halsdurchmesser
- 4:
- 5: Pressschräge
- 6: Presswinkel
- 7: Außenschräge
- 8: Stirnfläche
- 9: Schulter
- 10: Axialrichtung
- 11: Kopf
- 12: Gewindebohrung
- 13: Schaftteil
- 14: Hinterschneidung
- 15: Polygonfläche
- 16: Erhebung
- 17:
- 18:
- 19: Butzen
- 20: Blechdicke
- 21: Blech

- 100: Matrize
- 104: Matrizen-Durchmesser
- 107: Aufwölbung
- 108: Aufwölbungs-Stirnfläche

## Patentansprüche

1. Einpressmuttern-Vorrichtung mit einer Matrize (100) und einer Einpressmutter mit
- einem Kopf (11)
- einem Schaftteil (13) mit polygonem Außendurchmesser, wobei
- die als Stanzstempel wirkende Stirnfläche (8) des Schaftteiles (13) einen runden Außendurchmesser (Stanzdurchmesser 1) aufweist, und
- die Matrize einen runden Matrizendurchmesser (100) als wirksamen Innendurchmesser aufweist, und
- das Schaftteil (13) seinen größten Außendurchmesser (Pressdurchmesser 2) von der freien Stirnfläche des Schaftteiles (13) aus zurückversetzt aufweist,
**dadurch gekennzeichnet, dass**
der Matrizendurchmesser (104) größer als der Stanzdurchmesser (1), also die Stirnfläche des Schaftteiles, und kleiner als der Pressdurchmesser (2) ist.

2. Einpressmutter-Vorrichtung nach einem der vorhergehenden Ansprüche,
**dadurch gekennzeichnet, dass**
der Matrizendurchmesser (104) um 0,08 bis 0,12 mm pro mm der Blechdicke (20) größer ist als der Stanzdurchmesser (1) der Einpressmutter.

3. Einpressmutter-Vorrichtung nach einem der vorhergehenden Ansprüche,
**dadurch gekennzeichnet, dass**
- das Schaftteil (13) seinen größten Außendurchmesser (Pressdurchmesser 2) von der freien Stirnfläche des Schaftteiles (13) aus zurückversetzt aufweist und der Pressdurchmesser (2) bereits in der Aufsicht, betrachtet in Axialrichtung (10), polygon ausgebildet ist, und/oder insbesondere
- die axiale Länge der zwischen Pressdurchmesser (2) und Stanzdurchmesser (1) ausgebildeten Pressschräge (5) in Abhängigkeit vom PressschrägenWinkel (6) so groß gewählt ist, dass die insbesondere ebenen Polygonflächen (15) des Schaftteiles (13) zwischen Pressdurchmesser (2) und Schulter (9) des Kopfes (11) im Bereich der Pressschräge (5) auslaufen.

4. Einpressmutter-Vorrichtung nach einem der vorhergehenden Ansprüche,
**dadurch gekennzeichnet, dass**
- der Pressschrägenwinkel (6) zwischen 10° und 20°, insbesondere zwischen 13° und 17°, insbesondere 15°, beträgt, und/oder insbesondere
- die axiale Länge der Pressschräge (5) zwischen 5% und 25%, insbesondere zwischen 8% und 15% der axialen Länge des Schaftteiles (13) beträgt.

5. Einpressmutter-Vorrichtung nach einem der vorhergehenden Ansprüchen mit einer Hinterschneidung (14) durch nach außen unter einem spitzen Winkel abfallende Schulter (9) des Kopfteiles (11),
**dadurch gekennzeichnet, dass**
- die vom Schaftteil (13) nach außen schräg abfallende Hinterschneidung (14) vor dem Außendurchmesser des Kopfes (11) endet und in eine Außenschräge (7) übergeht, die nach außen ansteigt, und insbesondere die radiale Erstreckung der Außenschräge (7) zwischen 10% und 30%, insbesondere zwischen 15% und 25%, der radialen Erstreckung der Schulter (9) beträgt, und/oder insbesondere
- der Schrägstellungswinkel der Außenschräge (7) gegenüber der Querebene zur axialen Richtung (10) zwischen 10° und 30°, insbesondere zwischen 15° und 25° beträgt.

6. Einpressmutter-Vorrichtung nach einem der vorhergehenden Ansprüche,
**dadurch gekennzeichnet, dass**
- die Schulter (9) relativ zur Axialrichtung (10) auch bei rundem Außendurchmesser des Kopfes (11) keine rotationssymmetrische Fläche ist sondern eine in Umlaufrichtung gewellte oder gezackte Fläche, insbesondere bei rundem Außendurchmesser des Kopfes (11), und/oder insbesondere
- die wellige oder zickzackförmige Schulterfläche (9) zwischen 4 und 16, insbesondere zwischen 6 und 8 Erhebungen bzw. Täler über den Umfang aufweist.

7. Einpressmutter-Vorrichtung nach einem der vorhergehenden Ansprüche,
**dadurch gekennzeichnet, dass**
die Erhebungen in der Schulter (9) erzeugt sind durch radiale Einprägungen in die Außenumfangsfläche des Kopfes (1) nahe der Schulter (9), insbesondere bei rundem Außendurchmesser des Kopfes (1).

8. Einpressmutter-Vorrichtung nach einem der vorhergehenden Ansprüche,
**dadurch gekennzeichnet, dass**
die Aufwölbung (107) sich unmittelbar an den Matrizendurchmesser (104) anschließt.

9. Einpressmutter-Vorrichtung nach einem der vorhergehenden Ansprüche,
**dadurch gekennzeichnet, dass**
dass die Polygonflächen des Schaftes (13) in sich ebene Flächen oder in sich konkav nach außen weisende, insbesondere konkav um eine in der Querebene zur axialen Richtung (10) liegende Wölbungsachse, sind.

10. Einpressmutter-Vorrichtung nach einem der vorhergehenden Ansprüche,
**dadurch gekennzeichnet, dass**
- der Übergang zwischen der Aufwölbung (107) und der restlichen Stirnfläche (108) der Matrize (100) ein rechtwinkliger Absatz ist.

11. Einpressmutter-Vorrichtung nach einem der vorhergehenden Ansprüche im verbauten Zustand in einem Blech,
**dadurch gekennzeichnet, dass**
- die axiale Länge des Schaftteiles (13) um 1/10 bis 5/10 mm kürzer ist als die Blechdicke (20), insbesondere um 2/10 bis 3/10 kürzer, jeweils abhängig vom Material des Bleches, und/oder insbesondere
- die axiale Länge des Schaftteiles (13) um weniger als die axiale Erstreckung der Aufwölbung (107) der Matrize (100) kürzer ist als die Blechdicke (20).

12. Einpressmutter-Vorrichtung nach einem der vorhergehenden Ansprüche im verbauten Zustand in einem Blech,
**dadurch gekennzeichnet, dass**
die Schulter (9) umso größer ist, je dünner und/oder weicher das Blech ist, insbesondere dass die größte Schulter-Breite der Mutter mindestens 4 mm minus Blechdicke, besser 5 mm minus Blechdicke beträgt, und/oder insbesondere die Matrizen-Stirnfläche (108) eine ringförmig umlaufende Aufwölbung (107) aufweist, deren axiale Erstreckung insbesondere größer ist als die Differenz zwischen Blechdicke (20) und axialer Länge des Schaftes (13).

13. Einpressmutter-Vorrichtung nach einem der vorhergehenden Ansprüche im verbauten Zustand in einem Blech,
**dadurch gekennzeichnet, dass**
die axiale Länge des Matrizendurchmessers (104) größer, insbesondere um den Faktor 1,2 bis 1,8 größer, ist als die Blechdicke (20).

14. Verfahren zum Ausstatten eines Blechbiegeteiles mit daran drehfest fixierter Einpressmutter-Vorrichtung, nach einem der Ansprüche 1-13,
**dadurch gekennzeichnet, dass**
- das Einpressen der Einpressmutter in das Blechbiegeteil im gleichen Arbeitsschritt wie das Stanzen und/oder Biegen des Blechbiegeteiles erfolgt, und
- insbesondere vor dem Abtrennen des einzelnen Blechbiegeteiles von dem quasi endlos zugeführten Blech-Rohteil.

15. Verfahren nach Anspruch 14,
**dadurch gekennzeichnet, dass**
das Abtrennen des einzelnen Blechbiegeteiles im gleichen Arbeitsschritt wie das Stanzen und/oder Biegen des Blechbiegeteiles und Einpressen der Einpressmutter erfolgt, jedoch lediglich zeitlich nach diesen genannten Schritten.

## Claims

1. A clinch nut device with a female die (100) and a clinch nut with
• a head (11),
• a shaft section (13) with a polygon shaped outer diameter, wherein
• the front face (8) of the shaft section (13), acting as a male punching die has a round outer diameter (punch diameter 1), and
• the female die has a round female die diameter (104) as an effective inside diameter, and
• the shaft section (13) has its largest outer diameter (press diameter 2) recessed from the free front face of the shaft section (13),
**characterized in that**
the female die diameter (104) is larger than the punch diameter (1), this means the front face of the shaft section, and smaller than the press diameter (2).

2. A clinch nut device according to one of the preceding claims,
**characterized in that**
the female die diameter (104) is larger by 0.08 to 0.12 mm per mm of sheet metal thickness (20), than the punch diameter of the clinch nut.

3. A clinch nut device according to one of the preceding claims,
**characterized in that**
• the shaft section (13) has its largest outer diameter (press diameter 2) recessed from the free front face of the shaft section (13), and the press diameter (2) is already provided with polygon shape, seen in plan view in axial direction (10), and/or in particular
• the axial length of the press slant (5) between the press diameter (2) and the punch diameter (1) is selected depending on the press slant angle (6), so that the particularly planar polygon surfaces (15) of the shaft section (13) between the press diameter (2) and the shoulder (9) of the head (11) run out in the area of the press slant (5).

4. An clinch nut device according to one of the preceding claims,
**characterized in that**
• the press slant angle (6) is between 10° and 20°, in particular between 13° and 17°, in particular 15°, and/or in particular
• the axial length of the press slant (5) is between 5% and 25%, in particular between 8% and 15% of the axial length of the shaft section (13).

5. A clinch nut device according to one of the preceding claims with an undercut (14) through a shoulder (9) of the head piece (11), which tapers downwards to the outside at an acute angle,
**characterized in that**
• the undercut (14) tapering downwards to the outside from the shaft section (13) ends before the outer diameter of the head (11) and transitions into an outer slant (7), which rises towards the outside, and in particular the radial extension of the outer slant (7) is between 10% and 30%, in particular in between 15% and 25%, of the radial extension of the shoulder (9), and/or in particular
• the slant angle of the outer slant (7), relative to the plane perpendicular to the axial direction (10), is between 10° and 30° in particular between 15° and 25°.

6. An clinch nut device according to one of the preceding claims,
**characterized in that**
• the shoulder (9) is not a rotation symmetrical surface relative to the axial direction (10), also when the outer diameter of the head (11) is round, but a surface, which is undulated or serrated in rotation direction, in particular when the outer diameter of the head (11) is round, and/or in particular
• the undulated or serrated shoulder surface (9) has between 4 and 16, in particular between 6 and 8 rises or depresses along its circumference.

7. A clinch nut device according to one of the preceding claims,
**characterized in that**
the rises in the shoulder (9) are created through radial impressions into the outer circumferential surface of the head (11), close to the shoulder (9) in particular when the outer diameter of the head is round.

8. A clinch nut device according to one of the preceding claims,
**characterized in that**
the bulge (107) directly abuts to the female die diameter (104).

9. A clinch nut device according to one of the preceding claims,
**characterized in that**
the polygon surfaces of the shaft (13) each are planar surfaces, or they are each concave surfaces pointing towards the outside, in particular concave around a curvature axis located in a plane perpendicular to the axial direction (10).

10. A clinch nut device according to one of the preceding claims,
**characterized in that**
the transition between the bulge (107) and the remainder of the front face (108) of the female die (100) is a rectangular shoulder.

11. A clinch nut device according to one of the preceding claims installed in a piece of sheet metal,
**characterized in that**
• the axial length of the shaft section (13) is by 1/10 to 5/10 of a mm shorter than the sheet metal thickness (20), in particular by 2/10 to 3/10 shorter, depending on the material of the sheet metal, and/or in particular
• the axial length of the shaft section (13) is shorter, by less than the axial extension of the bulge (107) of the female die (100), than the sheet metal thickness (20).

12. A clinch nut device according to one of the preceding claims installed in a piece of sheet metal,
**characterized in that**
the shoulder (9) is the larger, the thinner and/or softer the sheet metal, in particular the largest shoulder width of the nut is at least 4 mm minus the sheet metal thickness, better 5 mm minus the sheet metal thickness, and/or in particular the female die front face (108) has an annular circumferential bulge (107), whose axial extension in particular is larger than the difference between the sheet metal thickness (20) and the axial length of the shaft (13).

13. A clinch nut device according to one of the preceding claims installed in a piece of sheet metal,
**characterized in that**
the axial length of the female die diameter (104) is larger, in particular by a factor of 1.2 to 1.8, than the sheet metal thickness (20).

14. A process for providing a bent sheet metal part with a clinch nut device, rotationally fixated to it according to one of the claims 1 to 13,
**characterized in that**
• the insertion of the clinch nut into the bent sheet metal part is performed in the same manufacturing step, as punching and/or bending of the bent sheet metal part, and
• in particular before cutting the particular bent sheet metal part off from the quasi endless length sheet metal blank.

15. A process according to claim (14),
**characterized in that**
cutting the particular bent sheet metal part off is performed in the same manufacturing step, as punching and/or bending the bent sheet metal part and inserting the clinch nut, however only time wise after the above steps.

## Revendications

1. Dispositif d'écrou de sertissage avec une matrice (100) et un écrou de sertissage comprenant
- une tête (11)
- une partie d'arbre (13) avec un diamètre externe polygonal,
- la surface frontale (8) de la partie d'arbre (13) présentant un diamètre externe rond (diamètre de découpage 7) et
- la matrice présentant un diamètre de matrice rond (104) en tant que diamètre interne actif, et
- la partie d'arbre (13) présentant son diamètre externe le plus grand (diamètre de pressage 2) décalé de la face frontale libre de la partie d'arbre (13),
**caractérisé en ce que**
le diamètre de matrice (104) est supérieur au diamètre de découpe (1) donc la surface frontale de la partie d'arbre et plus petit que le diamètre de pressage (2).

2. Dispositif d'écrou de sertissage selon l'une des revendications précédentes, **caractérisé en ce que** le diamètre de matrice (104) est supérieur de 0,08 à 0,12 mm par mm d'épaisseur de tôle (20) que le diamètre de coupe (1) de l'écrou de sertissage.

3. Dispositif d'écrou de sertissage selon l'une des revendications précédentes,
**caractérisé en ce que**
- la partie d'arbre (13) présente son plus grand diamètre externe (diamètre de pressage (2)) depuis la surface frontale libre de la partie d'arbre (13) décalée et le diamètre de pressage (2) présente une forme polygonale observé déjà en vue de dessus, dans la direction axiale (10), et/ou en particulier
- la longueur axiale de l'oblique de sertissage (5) formée entre le diamètre de pressage (2) et le diamètre de découpe (1) est sélectionnée en fonction de l'angle d'oblique de sertissage (6) de sorte que la surface polygonale en particulier plane (15) de la partie d'arbre (13) se termine dans la zone de l'oblique de sertissage (5) entre le diamètre de sertissage (2) et l'épaulement (9) de la tête (11).

4. Dispositif d'écrou de sertissage selon l'une des revendications précédentes,
**caractérisé en ce que**
- l'angle d'oblique de sertissage (6) est situé entre 10° et 20°, en particulier entre 13° et 17° en particulier 15° et/ou en particulier
- la longueur axiale de l'oblique de sertissage (5) est comprise entre 5 % et 25% et en particulier entre 8 % et 15 % de la longueur axiale de la partie d'arbre (13).

5. Dispositif d'écrou de sertissage selon l'une des revendications précédentes avec une dépouille (14) à travers un épaulement (9), incident vers l'extérieur sous un angle aigu, de la partie de tête (11),
**caractérisé en ce que**
- la dépouille (14) incidente oblique vers l'extérieur depuis la tête d'arbre (13) se termine avant le diamètre externe de la tête (11) et se poursuit par une oblique externe qui monte vers l'extérieur et en particulier l'extension radiale de l'oblique externe (7) est comprise entre 10 % et 30 % en particulier entre 15 % et 25 % de l'extension axiale de l'épaulement (9) et/ou en particulier
- l'angle de position oblique de l'oblique externe (7) par rapport au plan transversal de la direction axiale (10) est compris entre 10° et 20°, en particulier entre 15° et 25°.

6. Dispositif d'écrou de sertissage selon l'une des revendications précédentes,
**caractérisé en ce que**
- l'épaulement (9) n'est pas une surface symétrique en rotation par rapport au sens axial (10) également en cas de diamètre externe de la tête (11) mais une surface ondulée ou dentelée dans le sens circulaire en particulier en présence du diamètre externe de la tête (11) et/ou en particulier
- la surface ondulée ou dentelée présente sur la périphérie des élévations respectivement des creux au nombre de 4 à 16, en particulier de 6 à 8.

7. Dispositif d'écrou de sertissage selon l'une des revendications précédentes, **caractérisé en ce que** les élévations sont réalisées dans l'épaulement (9) par des estampages radiaux dans la surface périphérique externe de la tête (1) à proximité de l'épaulement (9) en particulier en présence du diamètre externe rond de la tête (1).

8. Dispositif d'écrou de sertissage selon l'une des revendications précédentes, **caractérisé en ce que** le bombement (107) est dans le prolongement direct du diamètre de matrice (104).

9. Dispositif d'écrou de sertissage selon l'une des revendications précédentes, **caractérisé en ce que** les surfaces polygonales de l'arbre (13) sont des surfaces planes en soi ou des surfaces tournée vers l'extérieur, concaves en soi en particulier concave autour d'un axe de bombement se trouvant dans le plan transversal par rapport à la direction axiale (10).

10. Dispositif d'écrou de sertissage selon l'une des revendications précédentes, **caractérisé en ce que** la transition entre le bombement (107) et le reste de la face frontale (108) de la matrice (100) est un décrochement rectangulaire.

11. Dispositif d'écrou de sertissage selon l'une des revendications précédentes, à l'état monté dans une tôle, **caractérisé en ce que**
- la longueur axiale de la partie d'arbre est plus courte de 1/10 à 5/10 mm que l'épaisseur de tôle (20) en particulier de 2/10 à 3/10 respectivement en fonction du matériau de la tôle, et/ou en particulier
- la longueur axiale de la partie d'arbre (13) est plus courte que l'épaisseur de tôle (20) d'une mesure inférieure à l'extension axiale du bombement (107) de la matrice (100).

12. Dispositif d'écrou de sertissage selon l'une des revendications précédentes, à l'état monté dans une tôle, **caractérisé en ce que** plus l'épaulement (9) est grand plus la tôle est mince et/ou molle, en particulier **en ce que** la plus grande largeur d'épaulement de l'écrou est d'au moins 4 mm moins l'épaisseur de tôle, au mieux 5 mm moins l'épaisseur de tôle et/ou en particulier la surface frontale de matrice (108) présente un bombement circulaire annulaire (107) dont l'extension axiale est en particulier supérieure à la différence ente l'épaisseur de tôle (20) et la longueur axiale de l'arbre (13).

13. Dispositif d'écrou de sertissage selon l'une des revendications précédentes, à l'état monté dans une tôle, **caractérisé en ce que** la longueur axiale du diamètre de matrice (104) est supérieure à l'épaisseur de tôle (20).

14. Procédé pour l'équipement d'une partie de flexion de tôle avec un dispositif d'écrou de sertissage fixé sans torsion selon l'une des revendications 1 à 13,
**caractérisé en ce que**
- l'enfoncement de l'écrou de sertissage dans la pièce de flexion de tôle s'effectue dans la même étape de travail que la découpe et/ou la flexion de la pièce de flexion de tôle et
- en particulier avant la séparation de la partie de flexion de tôle de la partie de tôle amenée quasi en continu.

15. Procédé selon la revendication 4, **caractérisé en ce que** séparation de la partie individuelle de flexion de tôle s'effectue dans la même étape de travail que la découpe et/ou la flexion de la pièce de flexion de tôle et le pressage de l'écrou de sertissage, cependant simplement dans le temps après les dites étapes.
